# EUROPEAN PATENT APPLICATION

(11) **EP 3 032 455 A1**
(43) Date of publication of application: **15.06.2016**
(21) Application number: 14306983.9
(22) Date of filing: 09.12.2014
(51) Int. Cl.: G06K 9/00

(54) **Device and method for the classification and the reclassification of a user activity**

(71) Applicant: Movea, 38000 Grenoble (FR)
(72) Inventor: Szacherski, Pascal, 38380 Saint-Laurent-Du-Pont (FR)
(74) Representative: Nguyen Van Yen, Christian

(57) **Abstract**

The invention relates to a portable device to monitor at least an activity of a user. The portable device comprises at least a first sensor configured to capture signals representative of at least a physical parameter induced by at least an activity of the user, and a channel of communication to processing capabilities. The processing capabilities are configured to perform a first classification algorithm to classify the signals representative of the at least a physical parameter over a first period of time into a first set of classes of activities of the user, and to perform a second classification algorithm to classify the at least an activity of the user at the output of the at least first classification algorithm over a second period of time which includes the first period of time using a second set of classes which is different from the first set of classes.

The invention also relates to a method to monitor, a computer program and a system to monitor at least an activity of a user.

## Description

### FIELD OF THE INVENTION

The present invention relates to portable devices capable of monitoring and registering the activities of its user. More specifically, the present invention relates to the way a portable activity monitoring device classifies the activities of its user.

### BACKGROUND PRIOR ART

An activity monitoring device is a device configured for the evaluation of the user's daily activities. Such a device is capable of detecting the types of activity the user is performing and may be able to quantify the detected activities. For example, the device could be used to detect when a user is walking and then count the number of steps and / or stairs the user takes, and determine the daily calorie burn of the user. These devices are usually portable, and can take for example the form of a bracelet or a (belt) clip. In these forms, they can be worn by the user all day long and continuously monitor his/her activity. Portable activity monitoring devices usually contain one or more sensors, for example accelerometers that measure the accelerations of the device due to the movements of the user. Nowadays, smart phones also include many types of sensors, including motion sensors, and can therefore also be used for this type of monitoring.

One important aspect of activity monitoring is the separation of activities into classes, or the classification of activities. The principle of a classification is to assign a class of activity such as "walk", "run", "rest", "play tennis" to certain periods in the user's day. This classification of activity may be used to determine the percentage of time that a user spends performing his/her different activities. A correct determination and classification of activities also allows the activation of activity-specific monitoring. For example, if the current detected activity of the user is "climb stairs", a specific procedure can be launched for counting steps and/or floors.

A simple classification system, where one is not interested in the type of activity, but rather the amount of activity, classifies the activities of the user in various classes representing a predetermined amount of activity by measuring the level of activity of the user for a short time window, less than 1 minute for example. This system may comprise e.g. 3 different classes: "rest", "low activity" and "high activity". Although this classification provides a hint about the user's activity, it fails to determine the precise activity of the user. For example, an activity identified as "high activity" may represent the activity of running as well as biking.

Moreover, such instantaneous classification fails when interpreting more complex or varying activities. For example, if the user is resting but changes his/her rest posture while still resting, a time window centered on the posture change may interpret it as "low activity", while the user is globally still resting.

In this application, we will refer as "primary activity" any activity which can be determined by monitoring the user for a very short time window. Many primary activities are basic and can be cyclic or repetitive. For example, walking is an activity that is very basic and repetitive and can be detected by observing the movement of the user in a very short time (e.g. the time it takes the user to take a few steps). On the other hand, hiking, while including the primary activity of walking, can only be determined by observing the user over a longer time period, and may also include other primary activities such as resting, standing or sitting. Indeed, it is impossible for a device to determine that the user is hiking with the only information that it is walking as concluded from a short term analysis. Such activities that cannot be determined using a short term analysis will be referred to as "secondary activity", and may contain a variation or repetition of one or more primary activities.

US 2013/0190903 (BALAKRISHNAN and al.), Jul. 25, 2013 discloses an activity classification that can operate on a small amount of time windows. If, in a small amount of time, the vast majority of time windows detect an activity type, for example resting, all time windows can be set to this activity type, ignoring any outliers. This method improves short-term activity classification. Indeed, in the example of a sudden move during the rest, this classification will apply the activity type of the vast majority of time windows, which still is "rest", to all time windows including the one that was initially detected as "low activity".

Detection of secondary activities like sleeping or hiking is a desirable feature for the monitoring of these specific activities. For example, the determination of the periods when the user is sleeping may allow the monitoring of data, such as sleep time, sleep quality, sleep cycles, or other feedback about his/her sleep that may be of interest to a user. However, a short time classification of activities is only able to detect primary activities, and is unable to understand the secondary activity of the user. For example, a short term analysis will not be able to detect the difference between a small rest and sleeping, or between a small utilitarian walk and a real hike.

Some devices overcome this issue by requiring the user to manually start and stop specific activity monitoring procedure. This is for instance the case with the Jawbone Up, the Fitbit Flex, or the Withings Pulse devices, where the sleep analysis function has to be started manually by the user.

Although achieving the desirable goal of using functions associated with secondary activities, such manual activation is very constraining for the user. They also may cause a loss of accuracy in the duration of activity monitoring. For example, a user may not likely manually start a sleep monitoring function at the exact time he/she is falling asleep.

One objective of the invention is to provide an activity monitoring device which is able, not only to automatically classify primary activities, but also to automatically classify secondary activities, as well as starting and stopping monitoring functions associated with secondary activities.

### SUMMARY OF THE INVENTION

To this effect, the invention discloses a portable device to monitor at least an activity of a user, said portable device comprising at least: a first sensor configured to capture signals representative of at least a physical parameter induced by at least an activity of the user; a channel of communication to processing capabilities, said processing capabilities configured to: perform a first classification algorithm to classify the signals representative of the at least a physical parameter over a first period of time into a first set of classes of activities of the user; perform a second classification algorithm to classify the at least an activity of the user at the output of the at least first classification algorithm over a second period of time which includes the first period of time using a second set of classes which is different from the first set of classes.

Advantageously, the second classification algorithm evaluates the activities of the user according to at least an analysis of the output of the first classification algorithm during the second period of time, which is larger than the first period of time.

In an embodiment of the invention, the classification of activities into a second set of classes is at least based on a data from a second sensor.

In an embodiment of the invention, the second sensor is packaged with the portable device.

In an embodiment of the invention, the second sensor is packaged with a second device.

In an embodiment of the invention, at least parts of the processing capabilities are packaged with a second device in communication with the portable device.

In an embodiment of the invention, at least parts of the processing capabilities are packaged with a third device in communication with the portable device.

In an embodiment of the invention, the processing capabilities are further configured to first label the at least an activity with a first class attributed by the first classification algorithm and then replace this first label by a second label corresponding to a second class attributed by the second classification algorithm.

In an embodiment of the invention, the processing capabilities are further configured to first label the at least an activity with a first class attributed by the first classification algorithm and then add to this first label a second label corresponding to a second class attributed by the second classification algorithm.

Advantageously, the processing capabilities are further configured to, if the second algorithm attributes at least one class of activity, launch a procedure in relation to said class of activity.

Advantageously, at least one sensor is one of accelerometer, gyrometer, magnetometer, pressure sensor, temperature sensor, gps sensor, audio sensor, optical sensor.

Advantageously, at least a physical parameter relates to the motion of the device imparted to the device by the movement of the user, and the first set of activities relates to the quantity of motion determined by the first classification algorithm.

In an embodiment of the invention, the second set of classes comprises at least a class of activity in relation to the sleep activity of the user.

Advantageously, the attribution of a class from the at least one class of activity in relation to the sleep of the user, starts an procedure for monitoring at least one parameter of the sleep of the user.

The invention also relates to a method to monitor at least an activity of a user, said method comprising at least: capturing signals representative of at least a physical parameter induced by the at least an activity of the user; performing a first classification algorithm to classify the signals representative of the at least a physical parameter over a first period of time using a first set of classes of activities of the user; performing a second classification algorithm to classify at least an activity of the user at the output of at least the first classification algorithm over a second period of time which includes at least the first period of time using a second set of classes which is different from the first set of classes.

The invention also relates to a computer program product, stored on a computer readable medium, configured for, when it is executed by a processor, monitoring at least an activity of a user, said program comprising at least: code means for capturing signals representative of at least a physical parameter induced by at least an activity of the user; code means for performing a first classification algorithm to classify the signals representative of the at least a physical parameter over a first period of time using a first set of classes of activities of the user; code means for performing a second classification algorithm to classify at least an activity of the user at the output of at least the first classification algorithm over a second period of time which includes at least the first period of time using a second set of classes which is different from the first set of classes.

The invention also relates to a system to monitor at least an activity of a user, said system comprising at least: a first device comprising a first sensor configured to capture signals representative of at least a physical parameter induced by at least a an activity of the user; a portable device configured to: perform a first classification algorithm to classify the signals representative of the at least a physical parameter over a first period of time using a first set of classes of activities of the user; perform a second algorithm to classify at least an activity of the user at the output of at least the first classification algorithm over a second period of time which includes at least the first period of time using a second set of classes which is different from the first set of classes.

A device according to the invention has the ability to classify secondary activities, and is therefore able to provide information about a larger number of activities than an activity monitoring device that operates only with short time information.

A device according to the invention also provides a finer activity classification, since it is able to classify activities using activity history, and also, possibly a plurality of internal or external sensors and connected devices.

A device according to the invention is also able to automatically monitor a large number of activities with activity-specific procedures without any intervention from the user.

A device according to the invention offers a greater flexibility for setting the parameters of activity classifications, since it provides parameters for the first classification and the secondary reclassification.

### BRIEF DESCRIPTION OF THE DRAWINGS

The invention will be better understood and its various features and advantages will emerge from the following description of a number of exemplary embodiments and its appended figures in which:
- Figure 1 displays an example of a portable device configured to monitor the activities of the user and display an activity report;
- Figure 2 displays an example of a functional architecture of a portable activity device configured to monitor the activities of the user;
- Figure 3 displays an example of a method of classification and reclassification of activities in a number of embodiments of the invention;
- Figures 4a, 4b, 4c and 4d display respectively an example of sensor output, activity classification, activity reclassification and specific procedure launch in the exemplary case of Automatic Sleep Mode Activation;
- Figures 5a and 5b display an example of activity classification and activity reclassification using an internal sensor, in the exemplary case of a mountain hike;
- Figures 6a, 6b, and 6c display an example of activity classification and activity reclassification using an external sensor and specific procedure launch in the exemplary case of tennis;
- Figures 7 displays an example of a 2 level reclassification process in the example of a user performing a 200m swim medley;
- Figure 8 displays an example of activity classification and reclassification; in the exemplary case of public transportation;
- Figure 9 displays an example of an architecture of a portable device configured to monitor the activities of the user.

### DETAILED DESCRIPTION OF THE INVENTION

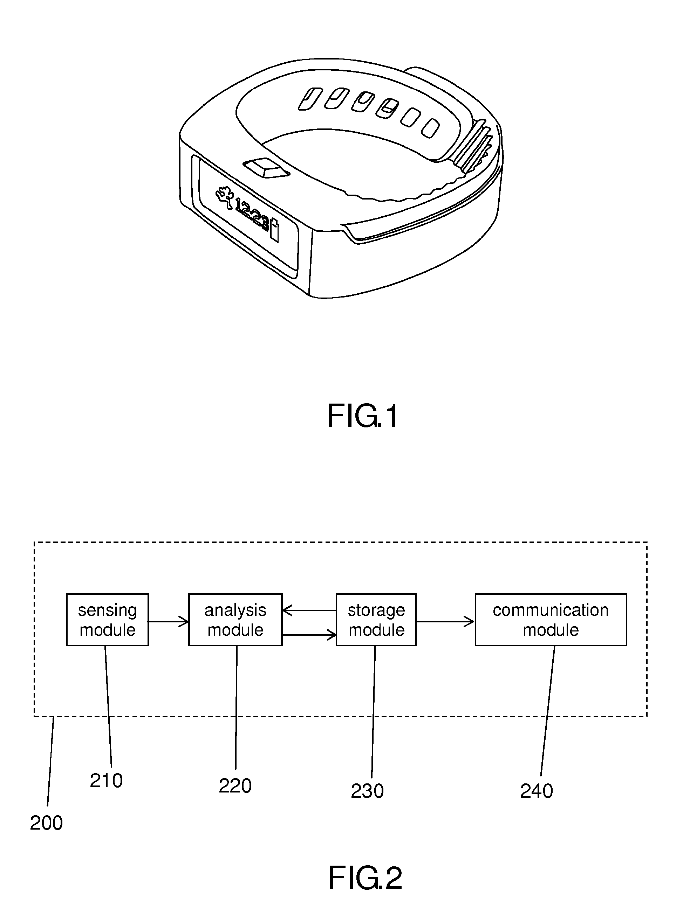

Figure 1 displays an example of a portable device that can be worn on the wrist of the user and is configured to monitor the activities of the user and display an activity report. The device is equipped with MEMS accelerometers to detect the movement of the device (e.g. Invensense MPU9250, Freescale MMA8451 Q). The acquired accelerometer signals are processed by a microcontroller (e.g. STM32f4) with an incorporated flash memory which contains the processing algorithms that determine the activity based on the accelerometer signals. The resulting activity logs that are calculated in the microcontroller are stored in a second flash memory linked to the microcontroller. Communication with the device, for example to retrieve the produced activity reports, is possible through a USB connector or by a wireless bluetooth protocol (e.g. Texas Instruments CC2540). In addition, the device features a small display where information related to the user's activities can be shown, for example the amount of steps.

Figure 2 displays an example of a functional architecture of a portable device configured to monitor the activities of the user. The portable device 200 comprises a sensing module 210, an analysis module 220, a storage module 230 and a communication module 240. The sensing module 210 contains the sensors to monitor the user's activities. The analysis module 220 analyses the information from sensing module 210. In particular, it is able to determine, according to information from sensing module 210, the activity of a user during a given period of time. Storage module 230 is used to store the output of analysis module 220. Information previously stored in module 230 might also be reused in the analysis module 220. The type of information that is stored depends on the analysis module and might vary from raw sensor signals to a final activity histogram of the user. Finally, communication module 240 is used to communicate information to the user, either by displaying the information directly to the user, in which case the device has to be equipped with some type of display (or audio) means, or transmitting the information to another device which is able to present the data to the user, such as for example a smartphone. This transmission can be performed by means of e.g. a USB connection, or a wireless connection such as e.g. Bluetooth.

The device may also be able to communicate with other devices which might include additional sensors, for example to retrieve additional information about user's activity. Such devices can be for example a tennis racket connected to a portable device to monitor tennis activity, a pair of shoes connected to portable device to monitor running activity, or any other device able to provide additional information about user activity.

Alternatively, the sensing module and the analysis module might not be in the same device. For example, the sensing module might be in a device worn by the user (e.g. a bracelet), which then communicates the sensor data to a second device (e.g. smartphone) which includes the analysis module and determines the activity of the user. This second device may also acquire additional info from other sensors or devices.

The device is able to translate the signals from the sensors in the sensing module into information relating to the activity of the user. Different types of sensors can be used depending on the activities that the device should be able to classify. In many cases the detection of the movement of the device is important, which can be done using accelerometers, gyrometers, and magnetometers to detect linear accelerations, angular velocities, and heading changes respectively. Pressure sensors can in addition be used to detect a change in elevation. Sound/audio sensors (microphone) and image sensors (camera) may also be used to get information on the activity of the user, directly or indirectly, for example by analyzing the surroundings of the user. A GPS sensor can be added if the absolute position of the device needs to be known. The sensors mentioned here are not meant to represent an exhaustive list, but should merely serve as examples. More generally, a first sensor shall be configured to capture signals representative of at least a physical parameter induced by at least an activity of the user. The person skilled in the art will be able to determine which sensors are needed in sensing module 210 depending on the activities that the device should be able to detect, the physical parameters related to these activities, and on the classification performed in analysis module 220.

In a first embodiment, a sensor detects the movements of the whole body, for example the translation / rotation of the whole body of the user, and the classification of activities is made according to these global movements.

In a second embodiment, a sensor is attached to a e.g. limb of the user and detects the movement of a specific limb. For example, a sensor attached to the ankle of the user is able to classify activities related to walking or running with greater accuracy.

According to the embodiments, the classification can be performed according to data from one sensor, or by fusing data from a plurality of sensors. In an embodiment with a plurality of sensors, sensors may be localized in the same device or in separate ones. Devices that contain sensors for activity classification may all be worn by the user, or at least one may not be worn by the user.

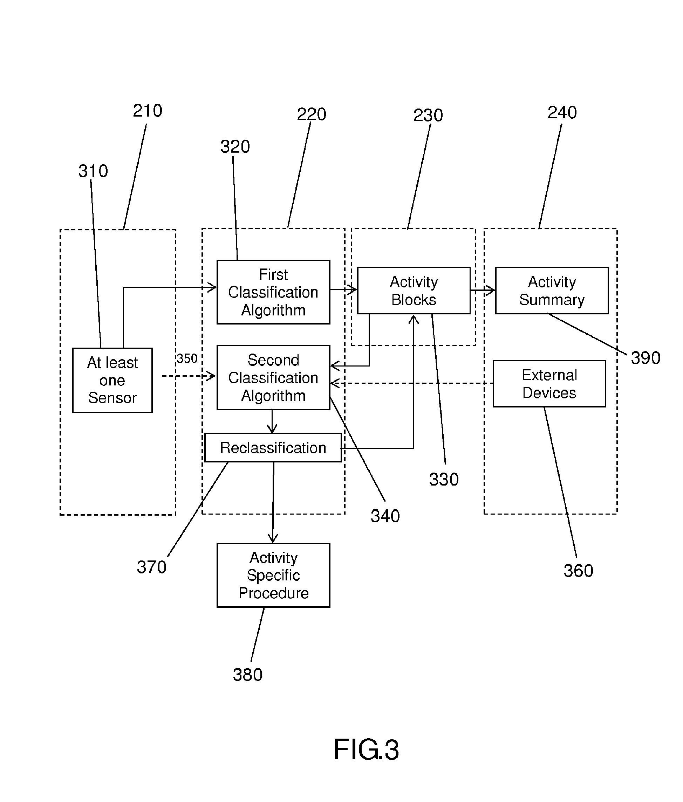

Figure 3 displays an example of a method of classification and reclassification of an activity in a number of embodiments of the invention.

In a number of embodiments of the invention, a first classification algorithm 320 analyses signals representative of the activity of the user from at least one sensor 310 over a first period of time. This algorithm is performing the first analysis of the sensor signals, and detects the primary class of activity of the user. It will be therefore referred to as "primary classification algorithm" or "first classification algorithm". Primary classes of activities are therefore the classes of activities that can often be instantly determined by analysis within a short time window. Based on the analysis, the activity of the user is attributed a class selected from a first set of classes of activities of the user. The available classes in the first set of classes depend on the details and capabilities of the first classification algorithm 320.

In an embodiment, a device according to the invention is equipped with a (3-axis) accelerometer. The device might, for example, be connected to the wrist of the user, or attached at the waist. By measuring the acceleration, a primary activity of the user is determined and divided into classes. The type of activity classes depends on the analysis algorithm. For example, in a basic embodiment we can determine the average acceleration for a certain time period (e.g. of the order of 30 seconds) and attribute classes by comparing the acceleration to certain thresholds: 'rest' in the (quasi-) absence of acceleration, 'low activity' for a medium average acceleration, and 'high activity' for high average accelerations.

In another embodiment, with a more advanced analysis of the accelerometer signal, it is possible to determine if the user is lying, sitting, standing, walking, or running and attribute the corresponding classes.

First classification algorithm 320 classifies the activity of the user for each period of time into activity blocks 330. An activity block represents the activity performed by the user over a certain period of time. In a number of embodiments, an activity block contains information about the beginning and duration of an activity, and at least one activity class. Activity blocks may have a fixed predefined duration, or a variable duration. For example, if the analysis algorithm analyzes the sensor signals for successive periods of 10 seconds and then attributes an activity class, the result will be a sequence of activity blocks, wherein each block represents the activity of the user for a period of 10 seconds. The duration of the activity blocks might be constant, which means that if the user is performing an activity for a period longer then a single block, it will result in a sequence of identical blocks. The typical duration of an activity block might vary between a few seconds and a few minutes depending on the activities that are of interest. For example, to determine if a user is standing, walking or running, an activity block might be quite short, such as 5 seconds, because this covers at least a few steps of the person. On the other hands, to analyze the sleep of the user, the activity blocks might be much longer, of the order of 1 minute or more.

Alternatively, the duration of the activity blocks might be variable. For example, an activity blocks might have the duration of the actual activity meaning an activity blocks start when there is a change in activity, and ends at the next activity change. In this case the activity block contains the activity and the duration. In the device 200, activity blocks 330 are stored in the storage module 230. Alternatively, the communication module 240 might be used to transfer the activity blocks 330 to an external storage device such as e.g. a smartphone.

The first classification algorithm 320 analyses the sensor signals over a relatively short time window, which means that the activity blocks 230 represent a short term view of the users activity. In addition, the device may perform a second classification algorithm 340 at the output of at least the first classification algorithm. This second classification takes place over a second period of time and classifies the activities into a second set of classes of activities which is different from the first set of classes, where the second period of time includes at least the first period of time. The second classification algorithm 340 may be applied to the activity blocks in order to obtain more detailed knowledge of the activity of the user. For example, this second classification algorithm can be performed over a longer period of time by analyzing a sequence of activity blocks, or by combining the information of the activity blocks with more information from other sensors 350 from the same device or from external devices 360.

If the second classification algorithm yields more information, i.e. if the second classification algorithm classifies the activities of the user over said first period of time in a class of activity different from the output of the first classification algorithm over said first period of time, the classes attributed to the activity blocks after the first classification might need to be changed. The device can thus perform a reclassification 370 of the activities of the user over the first period of time into said class of activity different from the output of the first classification algorithm.

The step of reclassification 370 updates activity blocks according to the output of second classification algorithm 340. Activities that belong to the second set of classes will be referred to as "secondary activities".

The step of reclassification 370 may have a number of different objectives:
- Partition a list of activities into a second set of classes, different from the first set of classes, for which the classification cannot be based only on instantaneous or short term analysis of the sensor signals used for first classification. For example, 'sleep' is a secondary activity because in a short term analysis it is not possible to differentiate between sleep and rest or momentary absence of movement. The 'sleep' classification will be discussed in detail in the first example below;
- Combine the measurements of a plurality of sensors of different types or in different devices, possibly on different timelines, to combine two or more different classifications of primary activities into a third set of classes of activities where the reclassification is based on a list of secondary activities which are a combination of the plurality of primary activities or states. For example, a first device worn on the wrist might be classifying the activities of the user as walking and running, and a second device in the form of an electronic tennis racket is classifying different types of tennis swings. By combining the two different first classifications, the secondary algorithm classifies the activity as 'playing tennis'. The tennis classification will be discussed in detail in the third example below;
- Disambiguate a class of activities where the first classification algorithm was not able to attribute a specific activity. In this case the first classification algorithm might have attributed, for example, 'unknown' or 'inconclusive', and the second classification algorithm might be able to determine the actual class of activities over time or with other sensors.

Reclassification can be performed a number of times in succession or in an iterative manner, where the output of the second classification algorithm can serve again as the input in a next reclassification cycle using a longer time period or additional sensors. In specific embodiment of the invention, classes of states can be organized in a tree structure. By way of example: "Practicing sport" <- "Practicing athletics" <- "Running" <-"Running 100 m". In this tree structure, over a given period of time, the activity "practicing sport" is attributed by the first classification algorithm. Within this period of time, the second classification algorithm can classify an activity which was "practicing sport" into "practicing athletics", which is a first level of reclassification. The same second algorithm can classify activities that contained at least "practicing athletics" into "running". This is a second level of classification, because the attribution of the class "running" requires the class "practicing athletics" to have been attributed at least once, in a first level of classification. The same reasoning applies to the attribution of class "running 100 m", which imply that the class "running" has been attributed at least once, and is therefore a third level of reclassification.

In an embodiment, reclassification by reclassification algorithm 370 is done by replacing the original value representative of the class of activity in an activity block by a new value as determined by the secondary analysis. In another embodiment, activities are labels of the activity blocks. A label corresponding to a class attributed by the second classification algorithm can replace a label attributed by the first reclassification algorithm, or be added to it. An activity block can thus have more than one activity label. Therefore, in this embodiment an activity block is labeled with at least a primary activity from a first set of classes, and may be labeled with at least one secondary activity from a second set of classes, if it has been reclassified. In this case, the reclassification adds at least one class from the second set of classes of activities to a class from the first set of classes of activities.

The second classification algorithm 340 uses the activity blocks 330 produced by the first classification algorithm 320. When specific patterns of classes or a repetition of the same activity class occur, it is able to detect the occurrence of an additional class of activity, and classify a set of activity blocks into that class. If no specific pattern is found, the activity blocks keep their original classes. In an embodiment, the second classification algorithm 340 only uses the content of activity blocks to perform the classification. In another embodiment, the second classification algorithm 340 also uses information from an additional sensor 350 to perform its classification. In another embodiment, the second classification algorithm 340 also uses information from external devices 360 to perform its classification. Examples provided hereinafter will make apparent to the skilled man these different choices for the reclassification algorithm and their respective benefits.

The available classes in the first and second set of classes depend on the primary and second classification algorithm, respectively, and may depend on the device. A very basic first classification algorithm might only have a set a classes including 'no activity', 'low activity', and 'high activity', while an advanced first classification algorithm may have a set a classes including 'lying', 'sitting', 'standing', 'walking', and 'running'. Therefore, the complexity of the designation of the different classes depends on the sophistication of the primary algorithm, i.e. the activities that the algorithm can recognize, and the specifications of the device. In addition, the set of classes might also depend on the requirements or demands of the user.

A similar reasoning is valid for the second classification algorithm; the classes in the second set of classes depend on the algorithm and the specifications of the device.

Once the reclassification step 370 has successfully classified one or a plurality of activity blocks into an additional activity class, it also may start an activity specific algorithm 380 to provide, for example, additional information about the activity to the user. For example, if the second classification algorithm 340 has detected that the user was sleeping, it may further launch a sleep quality monitoring algorithm. In another example, if the second classification algorithm 340 has detected that the user was jogging, reclassification step 370 may, while updating the content of activity blocs, launch a specific procedure to monitor the duration and speed of the jogging, the distance crossed, and the heart rate of the user.

The activity blocks can be used to present an activity summary 390 to the user. This information may comprise the list of activities performed by the user according to activity blocks 230, as well as any information provided by the activity specific algorithm 370. In an embodiment, the device presents the activity information directly to the user by means of a display incorporated in the device (see e.g. figure 1). In another embodiment, for example when the device is not equipped with a display, the activity summary is transmitted to a second device where the user can look at his activity summary on the display.

In a situation where the user accesses the information in the activity summary after the reclassification has taken place, the user does not necessarily need to be aware that such a reclassification has taken place. Of course, the occurrence of the reclassification might be reported to the user. However, if the user has instant access to the real time information of the activity blocks and the activity summary, the user might be confused in changes in the activity report if he or she is not made aware of the reclassification.

The examples below will present a number of embodiments of the invention, and will make its various features and benefits apparent to the person skilled in the art.

### FIRST EXAMPLE

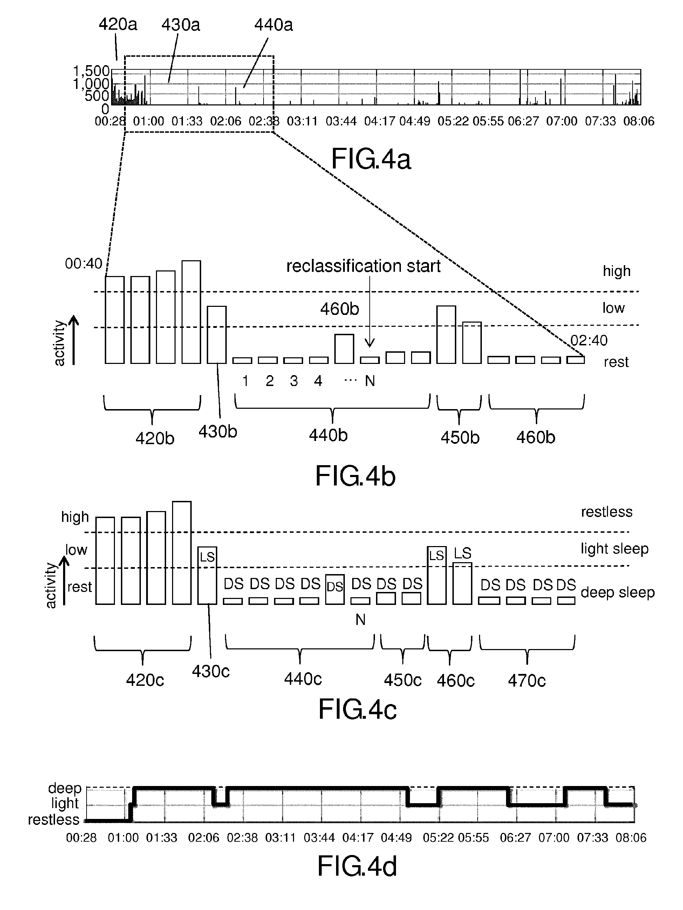

Figures 4a, 4b, 4c and 4d display respectively an example of sensor output, activity classification, activity reclassification and specific algorithm launch in the exemplary case of Automatic Sleep Mode Activation.

In a device, the Automatic Sleep Mode Activation is used to automatically detect when the user is sleeping, in order to perform a sleep analysis. This means that the device determines when the user is falling asleep, and when the user is waking up, and analyses the total sleep time and sleep quality in this time period. This Automatic Sleep Mode Activation is explained by means of example only, and runs on a portable device that can be worn on the wrists and contains at least an accelerometer to measure the motion of the device imparted to the device by the movement of the user.

Figure 4a displays the normalized output of the accelerometer of the device as a function of the time of the day, in this case during the night starting from about midnight. The accelerometer signals as shown in figure 4a are representative of the quantity of activity and the higher the signal the more the (wrist of the) user moves. For example, the figure shows a lot of movement 420a before 01:00 as the user goes to bed. During the night there are long periods of no movement at all 430a (e.g. 01:00 to 01:40), intersected with periods of small activity 440a (e.g. 02:10). This is typical behavior of the various sleep cycles a person experiences during the night. A typical sleep cycle is of the order of 90 to 120 minutes, and contains a period of deep sleep where muscle activity is slowed down, and a period of REM or paradoxical sleep where the brain is extremely active. After the REM and between two cycles, a brief awake phase occurs which is most of the time forgotten and is sent to the subconscious. During this wake phase some movement or repositioning takes place.

Figure 4b shows a schematic representation of the activity blocks 330 at the output of a first classification algorithm 320 for an extracted time window from 00:40 until 02:40. Note that the widths of the activity blocks are exaggerated for presentation purposes. In this example, the first classification algorithm 320 computes the average value of the accelerometer output over the duration of a small time window, and classifies, according to the average level of activity, the activity blocks into 3 classes representing a quantity of activity/motion: 'high activity' when the level of activity is above a first threshold; 'rest' when the level of activity if below a second threshold, lower than the first threshold, and 'low activity' when the average level of activity is between first and second thresholds. According to the data displayed in figure 4a, the first classification algorithm 320 classified activity blocks 420b before 01:00 into 'high activity' class, which is as expected with the user being active as he or she is preparing to go the bed. Activity block 430b corresponds to 'low activity' as the user is starting to fall asleep, followed by a series of activity blocks 440b where no activity is detected and which are thus classified as 'rest'. After a first sleep cycle, the user moves a bit and activity blocks 450b are classified as 'low activity', which is followed by another series of activity block 460b classified as 'rest'.

The first classification algorithm has converted the signals from figure 4a into a series of activity blocks and attributed a class from the first set of classes to each block ('high activity', 'low activity', 'rest'). Using the first classification algorithm 320 it is not possible to distinguish between activity blocks that have been classified as 'rest' because the user was sleeping during the night or because there was a momentarily period of inactivity during the day. If we want to be able to monitor the activities during the day and monitor the sleep quality during the night we have to be able to distinguish between a rest block during the day when the user is resting but is awake, from a rest block during the night when the user is sleeping. This is exactly the goal of the second classification algorithm 340.

Figure 4b shows a complete sequence of activity blocks 440b that are classified as rest because no activity is detected. Such a sequence is very logical when the user is sleeping, but highly unlikely during the day when the user is active and wearing the device. Therefore, it is possible to define a rule that stipulates that after a sequence of N rest blocks in a row, the user is considered to be sleeping, and not merely resting. Alternatively, the rule could be that for N activity blocks the percentage of blocks classified as blocks should be above a predefined threshold e.g. 90%. The second classification algorithm is thus designed to analyze the sequence of activity blocks that is output from the first classification algorithm, and detect if a sequence of N consecutive rest block is present. If this is the case it is determined that the user is sleeping since the start of the sequence, and the reclassification algorithm 370 is launched 460b. N might depend on the user, and can be pre-set, adjusted by the user, or adjusted automatically depending on the habits of the user.

At least one of the first or second classification algorithm should preferably also be able to detect false positives, meaning detecting when to user is not actually wearing the device so as to not to confuse this with the user sleeping. For example, if absolutely no movement is detected for an extended period of time, larger than the typical sleep cycle, it is more likely that the user is not wearing the device than that the user is sleeping. If the orientation of the device can be determined, this information can also be used as the typical orientation when wearing the device may be different from when the device is placed on a hard surface. If an internal clock is present, the time of day might be used to help determine the probability that the user is sleeping. If the device is equipped with a temperature sensor, the measured temperature can also help to determine when the user is wearing the device as in general the temperature of the device is higher when worn due to the radiation of the body temperature of the user.

Figure 4c displays the activity blocks 330 from figure 4b at the output of the reclassification 370, using the first set of classes (rest, low activity, high activity) and the second set of classes (deep sleep, light sleep, restless).

At the start of the reclassification 460b, the reclassification algorithm will reclassify all the blocks of the current sequence of blocks that were classified as rest 440b by the first classification algorithm into the new class of 'deep sleep' (DS) 440c. The activity blocks immediately before the rest sequence that were previously classified as 'low activity' 430b might be reclassified as 'light sleep' 430c as the user was most likely in the process of falling asleep. The high activity block 420b, might be classified as restless 420c, but might also be considered as being not part of the sleep process and therefore not be reclassified. In addition to reclassifying the sequence of the N rest blocks in deep sleep, the start of the reclassification also launches the activity specific algorithm 380, in this case the 'sleep mode'. As a consequence the future activity blocks with no activity will be directly classified as deep sleep (450c, 470c), and any block with low activity will be classified as light sleep 460c. In other words, since it is detected that the user is sleeping, the future classification will be performed using classes from the second set of classes corresponding to the sleeping activity. This might be done as immediate reclassification by the second classification algorithm, or instructions might be passed to the first classification algorithm to temporarily apply classes from the second set of classes.

Figure 4d displays the result of the reclassification where a class is attributed from the second set of classes throughout the night.

In the sleep mode, the activity specific algorithm or procedure can also be used to measure the actual sleep time, the sleep quality, the number of sleep cycles, the duration of the cycles etc.

Once in the sleep mode, the algorithm should also detect when the user is waking up, in order to de-activate the sleep mode and stop the automatic reclassification in the set of classes corresponding to the sleep mode. This detection can be similar as the start of the sleep mode, where it is determined that the user is awake after a certain sequence of consecutive activity block with a high activity.
In the embodiments described above the reclassification starts as soon as the sequence of N consecutive rest block is detected. In this case the reclassification takes place in the device and the activity blocks that are output from the device have the correctly attributed classes according to the primary and second classification algorithms. In an alternative embodiment the reclassification might not be instantaneous. The device might only perform the first classification algorithm, and then output the sequence of activity blocks. A second device, e.g. a smartphone, might communicate with the first device through the communication module 240 and obtain the sequence of activity blocks, and run the second classification on the second device. In this case the reclassification is identical: look for a sequence of N rest blocks which is considered the start of the sleep, and perform the reclassification according to the second set of classes until another sequence of M high activity blocks which is considered being caused by the user waking up.

### SECOND EXAMPLE

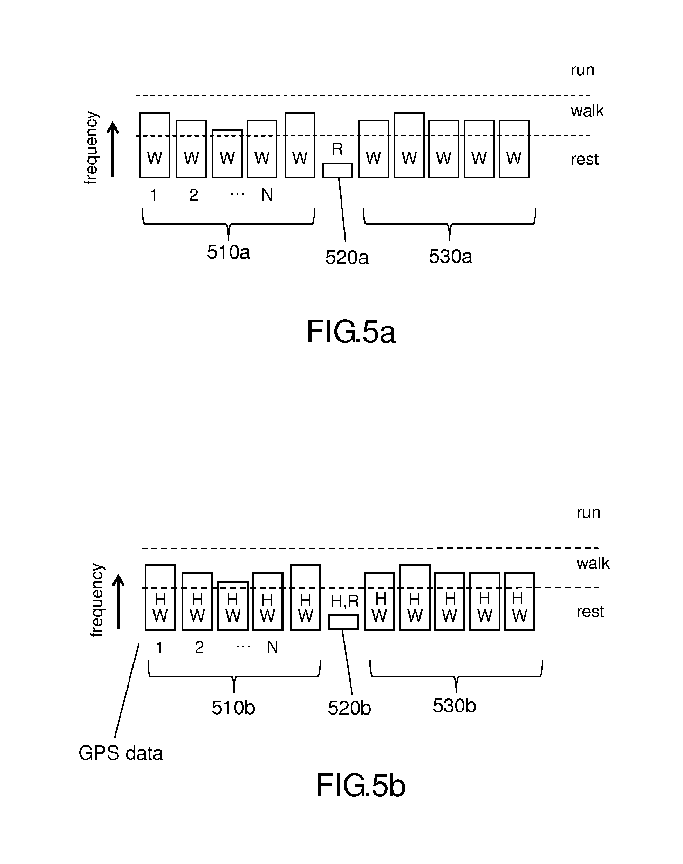

Figures 5a and 5b display an example of activity classification and activity reclassification using an internal sensor, in the exemplary case of a hike in the mountains.

Using a portable activity monitoring device and a first classification it is possible to divide the daily activities of the user in e.g. lying, sitting, standing, walking. During a normal day people walk from point A to B, but in general these are short walks for the purpose of transportation. On the other hand, people also walk for leisure or health purposes. A first classification algorithm is not able to distinguish between walking for transportation and for leisure.

In this example the user is performing a hike for leisure, for example in the mountains. The portable device comprises a gyrometer with a least two axes and a GPS and the first classification algorithm 320 is similar to the one used in the first example. This device is able, by performing a frequency analysis of the gyrometer signals on the different axes, to determine that the user is walking according to e.g. the method disclosed in EP2400889.

Figure 5a displays the activity blocks at the output of a first classification algorithm 320 during the hike in an embodiment of the invention. The first classification algorithm classifies the activity of the user into 3 classes, for example: "rest", "walk" and "run" according to the frequency of the movement of the user. The activity blocks 510a show that the user is walking (note that the width of the blocks are exaggerated for presentation purposes). The user takes a small rest 520a in the middle of the hike, after which the user continues to walk 530a.

Figure 5b displays the activity blocks at the output of the reclassification algorithm 370 during the hike in the mountains in an embodiment of the invention. In this example, the second classification algorithm 340 analyses the activity blocks (510a, 520a, 530a) output by the first classification algorithm and can use in addition information from the GPS sensor data. Similar to the sleep analysis, the algorithm can look at the duration of the walking activity. In general, walking for transport purposes has a short duration, while walking for leisure on a hike has a longer duration (e.g. > 20-30 minutes). The walking does not have to be continuous as in general people take small rests while on a long hike. For example, during a hike that lasts 2 hours, 90% of activity blocks may be classified as 'walk' and 10% as 'rest'. In addition, the GPS data indicates that the user has travelled 8 kilometers and climbed 450 meters of altitude. The GPS location can also help determine the type of walk, e.g. in this example the GPS location can indicated the hike was in the mountains. When the second classification algorithm determines that the user is hiking, it can start the reclassification algorithm 370. It therefore adds the 'hiking' labels ('H') to the activity blocks (510b, 520b, and 530b). By adding the hiking label even to the rest period 520b) the amount of rest during the hike can also be determined, and this rest can be separated from the resting or in-active periods during the other activities of the day. It also can launch a hike monitoring procedure 370 to evaluate the total duration, speed or distance of the hike.

### THIRD EXAMPLE

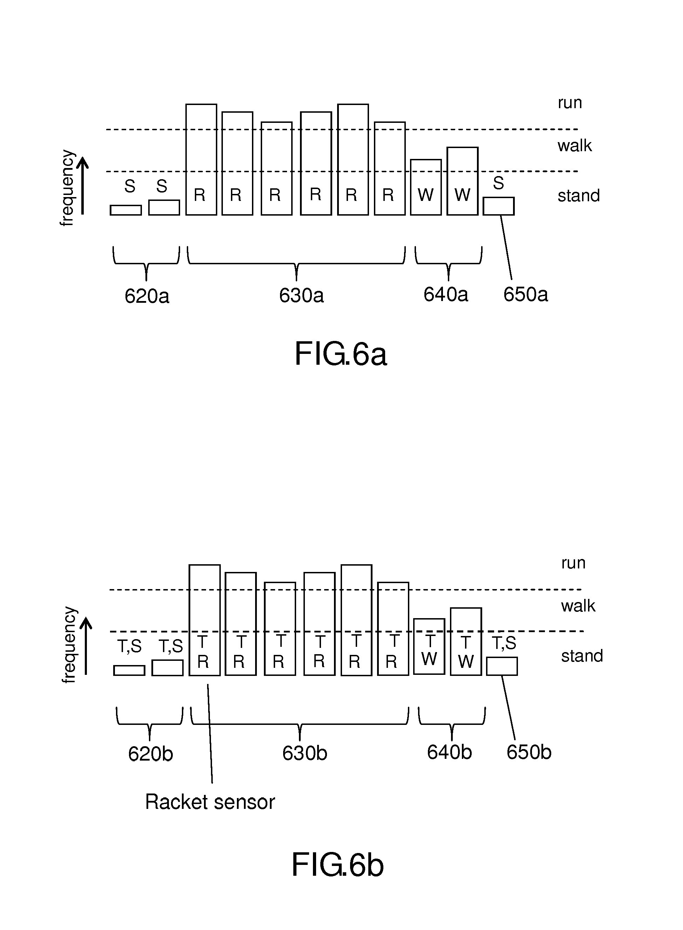

Figures 6a and 6b display an example of activity classification and activity reclassification using an external sensor and specific procedure launch in the exemplary case of tennis.

In this example, the user is playing tennis. The portable device comprises motion sensors including at least an accelerometer, and the first classification algorithm is capable of detecting at least the activities: standing, walking, running. The user is using an electronic tennis racket, meaning a racket equipped with motion sensors and able to detect the different types of swings, effects, and the impact locations (e.g. Play Pure Drive racket of Babolat). The racket may be equipped with piezoelectric sensors to detect the impact location, and a combination of accelerometer and gyrometer to determine the type of swing and effect. An example of such a racket is disclosed in detail in WO2013/167395.

During the tennis game, the user alternates periods of standing, walking and running. Figure 6a shows an example of the first classification in a game in tennis, where initially the user is standing 620a to serve or receive a service. During the game the user is running 630a from one tennis swing to the next. When the game has finished the user is walking 640a back to the baseline to serve again or receive the next serve 650a.

When the electronic racket is able to communicate with the activity monitoring device, the second classification algorithm 340 can link the activity of the racket with the results of the first classification. Figure 6b displays the output of a reclassification algorithm 370, which reclassifies activity blocks from figure 6a (620a - 650a) and adds the activity label 'tennis' ('T') to them (620b - 650b).

In this example the tennis racket is communicating with the portable activity monitoring device and the second classification algorithm running on the device can perform the reclassification immediately during the tennis if a real-time communication link is established, or the reclassification can be performed after the tennis if the device and the racket can only communicate once the play has finished. In an alternative embodiment, at least parts of processing capabilities are comprised within a third device in communication with the device as well as the tennis racket. This third device, for example a smartphone, combines the information from both device and performs the reclassification.

The reclassification algorithm 340 may also start an activity specific procedure 370 to monitor the tennis game or any interesting information about this activity. For example, the effective duration of the point can be determined by detecting the start of the point when the racket detects a serve, and the end of the point when the user stops running, and starts walking back to the baseline. In addition the (average) amount, and types of swing, during the points can be determined. If the racket or portable device is equipped with a localization sensor, the monitoring procedure may also compute the distance travelled during the tennis game. If the portable device comprises a sensor or function to compute the calorie burn, it may also compute calorie burn during the tennis game.

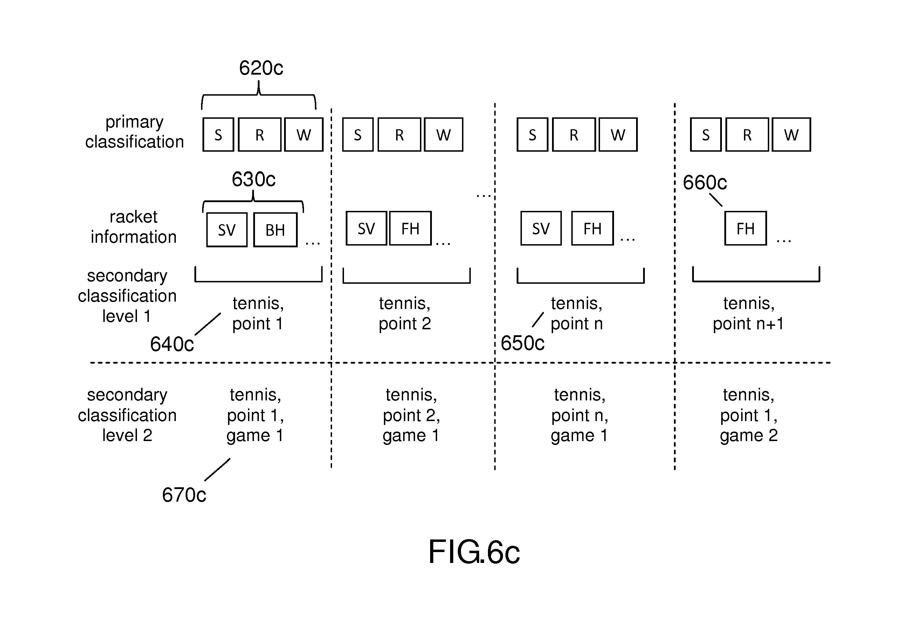

The activity specific algorithm 370 that is started once it has been detected that the user is playing tennis can also start a multi-level reclassification process. Figure 6c shows an example of the multi-level process in the present case of tennis. In level 1, the first classification 620c is combined with the information from the racket 630c as discussed in figures 6a and 6b. A point always starts with a serve (SV), and is followed, if the serve is not an ace, by one or more backhands (BH) or forehand (FH) swings. As mentioned above, during the point the user is running, and at the end of the point the user is walking (back to the baseline). All the activity blocks from the start (serve) to the end (walking) belong to the same point and can be classified as 'point 1' (640c). The same player serves for the next points, and the same process of classifying the 'points' is repeated until point n 650c when the game is won by one of the two players.

After the game has been decided, the other player is performing the serve, which means that the player who was serving in the previous point will now be the one receiving the serve and will start the points by either a forehand 660c or backhand swing. By detecting that the other player is performing the serve, it can be deduced that the previous point was the last point of the previous set, and that the point currently being played is the first point of the next game. Now in the level 2 reclassification, the output of the level 1 reclassification serves as the input for the level 2 reclassification and the activity label 'game 1' 670c can be added to the points for the game in question (640c-650c).

### FOURTH EXAMPLE

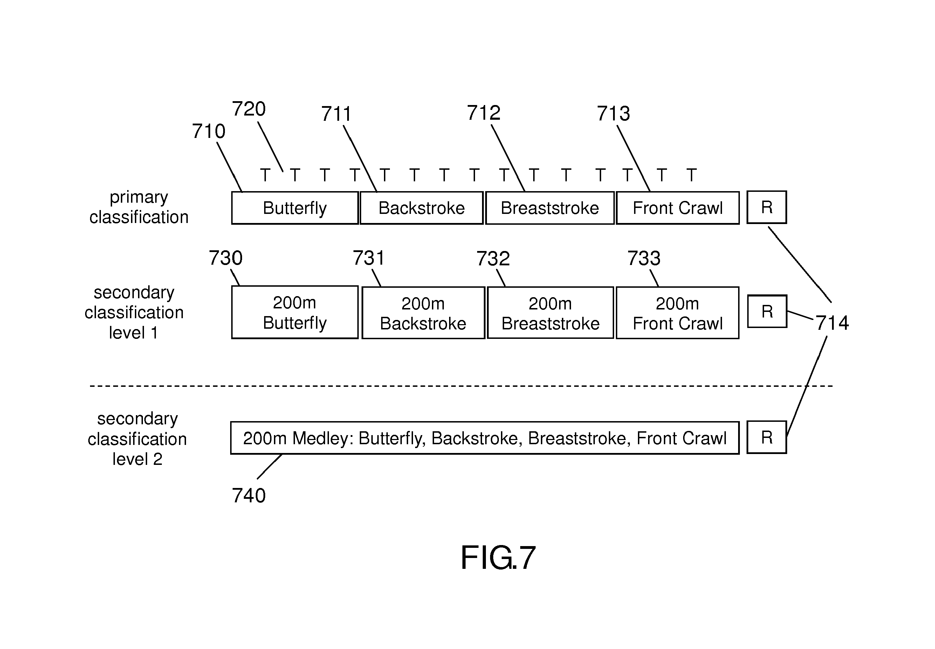

Figure 7 shows an example of a 2 level reclassification process in the example of a user performing a 200m swim medley.

In this example the user is wearing a portable activity monitoring device with algorithms designed for swimming. The device is able to detect the different swim strokes of the user (breaststroke, backstroke, front crawl and butterfly), and can detect when the user is turning in order to count the number of lanes. The first sensor may capture the signals representative of the motion of the swimmer. Alternatively, the first sensor is a pressure sensor that detects pressures variations when swimming. Some examples of such methods are disclosed in US2012/072165 (swim stroke) and US 2012/0283856 (changes of directions). In this case, the first classification algorithm analyses the output of sensor by successive short periods. According to detection methods such as those disclosed in the references above, the first classification algorithm determines that the user is successively performing butterfly 710, backstroke 711, breaststroke 712, front crawl 713, and then rest 714. In parallel, the device uses a method such as those described in US 2012/0283856 to detect the turns, marked 'T' 720.

Over a longer period of time, a level 1 secondary classification algorithm analyses the output 710, 711, 712, 713, 714 of the first classification algorithm, along with information 'T' about turns. The length of the pool may have been entered manually by the user, determined from the displacement of the user, or by GPS. Using that information, the secondary classification algorithm may determine that the user has successfully performed 200m butterfly 730, 200m backstroke 731, 200m breaststroke 732, 200m front crawl 733, and rest 714.

In addition to the second classification where the separate swim strokes and distances are classified, a level 2 second classification algorithm can also be used. The level 1 second classification has determined that the user has done 4 different swim strokes, each for 200m, after which the user is a rest 714. The level 2 classification can be programmed to recognize this pattern as a '200m medley', using the results from the level 1 second classification as an input. Thus, after the 200m front crawl, the reclassification 370 can add the '200m medley' classification label 740.

This example demonstrates the ability of the invention to classify activities on several levels. It is also able to mix activities from several levels, for example 200m medley 740 (level 2 reclassification) and rest 714 (first classification). It is also possible to reclassify classes of activity over only a part of the time window. For example, the second level of reclassification has reclassified some of the activity blocks in the time window into 200m medley 740, but let others in the rest activity 714 which is issued from the first classification algorithm It is possible to run concurrently a plurality of second classification algorithms 340. In addition, the second classification algorithm may be able to classify activities according to the output of the first classification algorithm 320, a second classification algorithm 340 or a mix of activity blocks from both the first classification algorithm 320 and a second classification algorithm 340.

### FIFTH EXAMPLE

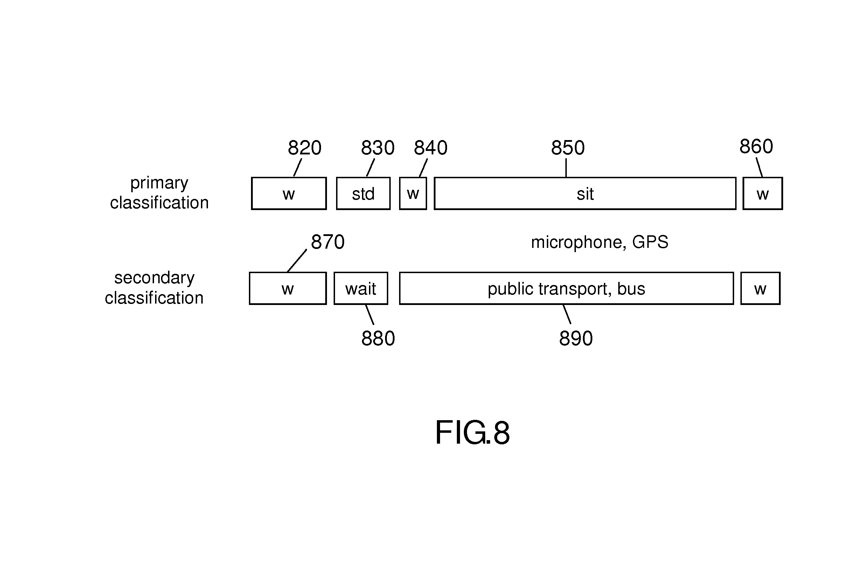

Figure 8 displays an example of activity classification and activity reclassification using an internal sensor, in the exemplary case of the user using means of public transportation.

In this example the user is using a means of public transportation, for example a bus, metro, or train. The activity blocks of the first classification 320 in figure 8 shows that the user is initially walking ('w') 820 to the bus stop. At the bus stop, the user is standing ('std') 830 and waiting for the bus to arrive. Once the bus has arrived, the user enters the bus and walks to a seat 840. During the trajectory the user is sitting 850. Arrived at the bus stop close to his or her destination, the user gets up and walks out of the bus and continues walking to the destination 860.

The second classification algorithm 340 receives the activity blocks, and in addition can receive information from the microphone and the GPS. It infers, according to the sequence of activities 820, 830, 840, 850, 860 and the information from GPS, that the user moved while he was sitting 850 and must thus be using some means of transportation.. When the user is in the bus (or metro, train, ...) the microphone can pick up the background noise, and use a (frequency) analysis to determine the type of transport. An example of such method is disclosed by A. Rakotomamonjy, G. Gasso, *"Histogram of gradients of Time-Frequency Representations for Audio scene* detection". The GPS might also provide information on the speed and the position where the user gets on and off the bus. The positions can be used in combination with lookup tables to help determine or confirm what type of transportation stops at these particular stops and which line he or she took.

Once the second classification algorithm has determined that the user is using public transportation, and which type of transportation, the reclassification process 370 can start. The period that the user was standing still 830 at the bus stop can be reclassified as waiting 880 for the bus to arrive, and the activity blocks 'walking' 840 and 'sitting' 850 can be regrouped into 'public transportation'. If the type of transportation can be determined, an additional label, in this case 'bus' can be added. In addition, the activity specific algorithm can be started that can keep track of e.g. the actual time the bus left, and the total transportation time. This data can be compared to the advertised times and used to optimize future public transportation trips.

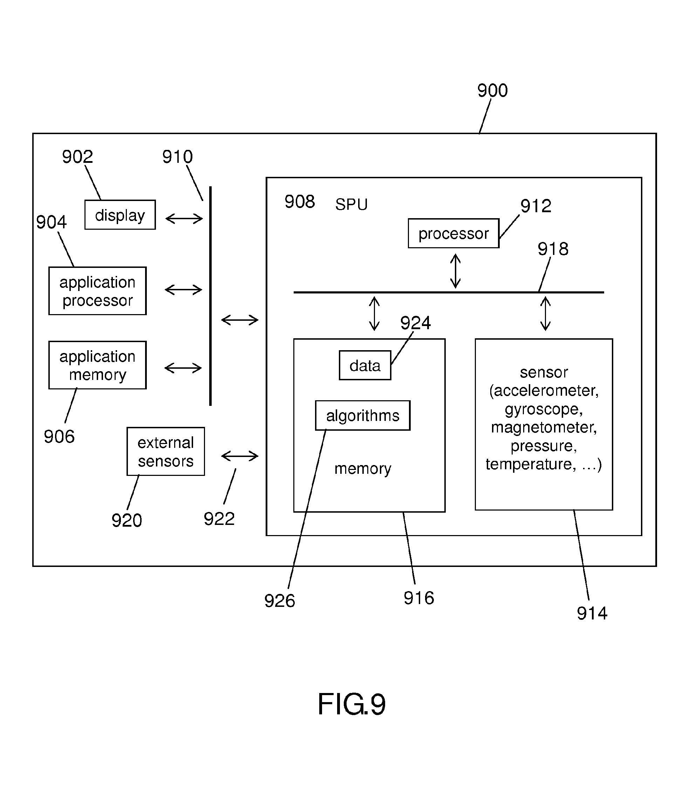

Figure 9 displays an example of an architecture of a portable device 900 configured to monitor the activities of the user. The device 900 may be similar to host device 200 as described with reference to Fig. 2. The device 900 may include a display 902, an application processor 904, application memory 906 and a sensor processing unit 908 (further referred to as SPU). Communication may be done over a device bus 910. The sensors 914 in the SPU 908 may be implemented using the MEMS technique. All the modules of the SPU (processor, memory, sensors) may be integrated into a single chip.

SPU 908 may include a processor 912, one or more sensors 914, and a memory 916. All communication within the SPU may be done over a SPU bus 918. One or more external sensors 920 may communicate with the SPU 908 over link 922. Data portion 924 of memory 916 may be used to store permanent and transient values generated during the operation of the SPU 908. The first and second classification algorithms 926 may be stored in memory 916. The processing of the algorithms 926 may take place using processor 912, and the resulting activity blocks and labels may be stored in the data portion 924 of memory 916. If all the processing, classification, and reclassification is done within SPU 908, the output of the SPU may be the activity blocks/log including the primary and secondary classes of activity. Alternatively, part of the data or algorithms may be stored in application memory 906, and part of the processing may be done by application processor 904. For example, the first classification algorithm might be stored on memory 916 and processes the sensor data 924 on processor 912. The resulting activity block with the primary classes of activity may be stored in memory 916 or application memory 906. Next, the secondary classification algorithm, which may be stored on application memory 906, may be run on application processor 904, and the resulting activity block with the secondary classes of activity may be stored in application memory 906. In this case, the output of the SPU after the first classification algorithm may be the activity blocks/log with the primary classes of activity.

Device 900 may be a smartphone or a smartwatch including a display where the results of the activity (re-)classification may be shown. Alternatively, the device 900 may be a fitness tracker in the form of a bracelet or a (belt) clip without a display, but with communication means to output the results to another device that does include a display, such as a smartphone.

The examples described above are given as illustrations of embodiments of the invention. They do not in any way limit the scope of the invention which is defined by the following claims.

## Claims

1. A portable device to monitor at least an activity of a user, said portable device comprising at least:
- A first sensor (310) configured to capture signals representative of at least a physical parameter induced by at least an activity of the user;
- A channel of communication to processing capabilities, said processing capabilities configured to:
- Perform a first classification algorithm (320) to classify the signals representative of the at least a physical parameter over a first period of time into a first set of classes of activities of the user;
- Perform a second classification algorithm (340) to classify the at least an activity of the user at the output of the at least first classification algorithm over a second period of time which includes the first period of time using a second set of classes which is different from the first set of classes.

2. The device of claim 1, wherein the second classification algorithm evaluates the activities of the user according to at least an analysis of the output of the first classification algorithm during the second period of time, which is larger than the first period of time.

3. The device of claim 1 to 2, wherein the classification of activities into a second set of classes is at least based on a data from a second sensor.

4. The device of claim 3, wherein the second sensor is packaged with the portable device.

5. The device of claim 3, wherein the second sensor is packaged with a second device.

6. The device of claim 1 to 4, wherein at least part of the processing capabilities are packaged with a second device in communication with the portable device.

7. The device of claim 5, wherein at least part of the processing capabilities are packaged with a third device in communication with the portable device.

8. The device of claims 1 to 7, wherein the processing capabilities are further configured to first label the at least an activity with a first class attributed by the first classification algorithm and then replace this first label by a second label corresponding to a second class attributed by the second classification algorithm.

9. The device of claims 1 to 7, wherein the processing capabilities are further configured to first label the at least an activity with a first class attributed by the first classification algorithm and then add to this first label a second label corresponding to a second class attributed by the second classification algorithm.

10. The device of claims 1 to 9, wherein the processing capabilities are further configured to, if the second algorithm attributes at least one class of activity, launch a procedure in relation to said class of activity.

11. The device of claims 1 to 10, wherein at least one sensor is one of accelerometer, gyrometer, magnetometer, pressure sensor, temperature sensor, gps sensor, audio sensor, optical sensor.

12. The device of claims 1 to 11, wherein the at least a physical parameter relates to the motion of the device imparted to the device by the movement of the user, and the first set of activities relates to the quantity of motion determined by the first classification algorithm.

13. The device of claim 12, wherein the second set of classes comprises at least class of activity in relation to the sleep of the user.

14. The device of claim 13, wherein the attribution of a class from the at least one class of activity in relation to the sleep of the user, starts an application for monitoring at least one parameter of the sleep of the user.

15. A method to monitor at least an activity of a user, said method comprising at least:
- capturing signals representative of at least a physical parameter induced by the at least an activity of the user (310);
- performing a first classification algorithm to classify the signals representative of the at least a physical parameter over a first period of time using a first set of classes of activities of the user (320);
- performing a second classification algorithm to classify at least an activity of the user at the output of at least the first classification algorithm over a second period of time which includes at least the first period of time using a second set of classes (340) which is different from the first set of classes.

16. A computer program product, stored on a computer readable medium, configured for, when it is executed by a processor, monitoring at least an activity of a user, said program comprising at least:
- code means for capturing signals representative of at least a physical parameter induced by at least an activity of the user (310);
- code means for performing a first classification algorithm to classify the signals representative of the at least a physical parameter over a first period of time using a first set of classes of activities of the user (320);
- code means for performing a second classification algorithm to classify at least an activity of the user at the output of at least the first classification algorithm over a second period of time which includes at least the first period of time using a second set of classes (340) which is different from the first set of classes.

17. A system to monitor at least an activity of a user, said system comprising at least:
- a first device comprising a first sensor configured to capture signals representative of at least a physical parameter induced by at least a an activity of the user (310);
- a portable device configured to:
- perform a first classification algorithm to classify the signals representative of the at least a physical parameter over a first period of time using a first set of classes of activities of the user (320);
- perform a second algorithm to classify at least an activity of the user at the output of at least the first classification algorithm over a second period of time which includes at least the first period of time using a second set of classes (340) which is different from the first set of classes.
